(19) Europäisches Patentamt
European Patent Office
Office européen des brevets

(11) **EP 3 093 855 B1**

(12) **EUROPEAN PATENT SPECIFICATION**

(45) Date of publication and mention
of the grant of the patent:
**27.11.2019 Bulletin 2019/48**

(21) Application number: **15734890.5**

(22) Date of filing: **06.01.2015**

(51) Int Cl.:
*H01B 7/02* (2006.01)     *H01F 5/06* (2006.01)
*H01B 3/10* (2006.01)     *H01B 3/30* (2006.01)
*H01F 27/28* (2006.01)     *H02K 3/30* (2006.01)

(86) International application number:
**PCT/JP2015/050123**

(87) International publication number:
**WO 2015/105095 (16.07.2015 Gazette 2015/28)**

(54) **INSULATED ELECTRIC WIRE, COIL AND ELECTRIC/ELECTRONIC DEVICE, AND CRACKING PREVENTION METHOD FOR INSULATED ELECTRIC WIRE**

ISOLIERTER ELEKTRISCHER DRAHT, SPULE UND ELEKTRISCHE/ELEKTRONISCHE VORRICHTUNG UND RISSVORBEUGUNGSVERFAHREN FÜR ISOLIERTEN ELEKTRISCHEN DRAHT

FIL ÉLECTRIQUE ISOLÉ, BOBINE ET DISPOSITIF ÉLECTRIQUE/ÉLECTRONIQUE, ET PROCÉDÉ DE PRÉVENTION DE FISSURATION POUR FIL ÉLECTRIQUE ISOLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2014 JP 2014002977**

(43) Date of publication of application:
**16.11.2016 Bulletin 2016/46**

(73) Proprietors:
• **FURUKAWA ELECTRIC CO., LTD.**
  **Chiyoda-ku**
  **Tokyo 100-8322 (JP)**
• **Furukawa Magnet Wire Co., Ltd.**
  **Tokyo 100-0005 (JP)**

(72) Inventors:
• **OYA, Makoto**
  **Tokyo 100-8322 (JP)**
• **IKEDA, Keisuke**
  **Tokyo 100-8322 (JP)**

(74) Representative: **Forstmeyer, Dietmar et al**
**BOETERS & LIECK**
**Oberanger 32**
**80331 München (DE)**

(56) References cited:
CA-A1- 2 850 102        JP-A- H03 152 812
JP-A- H09 106 712       JP-A- 2001 155 551
JP-A- 2011 009 200      JP-A- 2013 041 700
US-A1- 2011 240 331     US-A1- 2012 279 752
US-A1- 2013 037 304

**Description**

TECHNICAL FIELD

The present invention relates to an insulated wire, a coil, and electrical/electronic equipment.

BACKGROUND ART

In electrical/electronic equipment (also referred to as electrical equipment), insulated wires are used. Attempts have been so far made on insulated wires for improving properties by providing a covering resin layer formed of a resin having properties different from the properties of an enamel-baked layer outside the enamel-baked layer. Specific examples of the insulated wires in which the covering resin layer is provided on the enamel-baked layer include magnet wires described in Patent Literature 1. In such insulated wires which the covering resin layer is provided, adhesion (also referred to as interlayer adhesion) between the enamel-baked layer and the covering resin layer influences performances thereof, and therefore the enamel-baked layer and the covering resin layer have been firmly adhered or bonded to each other.

In recent years, various performances, for example, heat resistance, mechanical properties, chemical properties, electrical properties, reliability and the like have become required to be improved more than ever before in the electrical equipment.

As one of the means, studies have been made on further improving the above-described adhesion. For example, proposals have been made on reducing an amount of solvent remaining in the enamel-baked layer or the covering resin layer (for example, see Patent Literature 2). Such reduction of an amount of remaining solvent is also regarded to be preferable in view of improving appearance of the insulated wires.

Advance of the electrical equipment represented by rotating electric machines or transformers, has been progressed resulting in size reduction and improved performance. Thus, it becomes usual in many cases that insulated wires are used in such a way that the insulated wires are processed by winding (also referred to as coil processing or bending processing) to winding wires (coils) and they are pushed into a quite small space to pack. In this way, it is no exaggeration to say that the performance of a rotating electric machine, such as a motor, is determined by how many coils produced by coil processing the insulated wires into a coil shape can be held in a stator slot. As a result, improvement of the ratio of the sectional area of conductors to the sectional area of the stator slot (space factor described below) has been required to be particularly highly increased. For the reasons discussed above, it has been lately attempted to use a rectangular wire in which the conductor has a cross-sectional shape similar to a quadrilateral (square or rectangle), as a means for increasing the space factor.

CITATION LIST

PATENT LITERATURES

Patent Literature 1: JP-A-S63-195913 ("JP-A" means unexamined published Japanese patent application)
Patent Literature 2: Japanese Patent No. 4245244

US 2013/0037304 A1 discloses an insulated wire having a conductor, a particular baked enamel layer provided on the outer periphery of the conductor directly or through an insulated layer, and at least one extrusion-coated resin layer provided on the outer side of the baked enamel layer.

SUMMARY OF INVENTION

TECHNICAL PROBLEM

When an electric current passes through an insulated wire assembled into electrical equipment, the insulated wire reaches a high temperature by heat generated. A covering resin layer in the insulated wire is also exposed to the high temperature, and thermally degraded and thermally shrunk. This thermal shrinkage is particularly significantly caused in the insulated wire used in the electrical equipment in which a space factor is improved. When the thermal shrinkage of the covering resin layer is increased, the covering resin layer cannot withstand a thermal shrinkage stress, and cracking is caused.

Moreover, a mechanical stress acts on or remains in the insulated wire during winding processing and also even after winding processing, and the cracking is caused in several cases. In particular, in the case where the space factor is improved, a large mechanical stress acts on the insulated wire, and therefore the cracking is easily caused.

Furthermore, when the covering resin layer is formed by extrusion molding, a stress acted thereon during extrusion molding remains in the covering resin layer even after the extrusion molding in several cases, and the cracking caused by the above-described thermal shrinkage stress and mechanical stress is induced in several cases.

In the conventional insulated wire, partly because the enamel-baked layer and the covering resin layer are firmly adhered or bonded to each other, when the cracking is caused in the covering resin layer, the cracking is easily caused also in the enamel-baked layer together with the covering resin layer with the cracking in the covering resin layer as a starting point, and when enamel-baked layer cracking reaches a conductor (the enamel-baked layer cracking that reaches the conductor with the covering resin layer cracking as the starting point is referred to as "cracks reaching the conductor"), insulation performance of a multilayer insulated covering formed of the enamel-baked layer and the covering resin layer is adversely affected, and eventually reliability of the insulated wire is adversely affected. When the insulated wire processed by winding causes such cracks reaching the conductor, the electrical equipment develops no desired performance.

Accordingly, the present invention is contemplated for providing an insulated wire having a multilayer insulated covering in which the cracks reaching the conductor are hard to occur, and having high reliability, and a coil and electrical equipment using the insulated wire.

In the present invention, "high reliability" means that the insulated wire holds properties of the insulated wire, particularly the insulation performance within a tolerable range.

SOLUTION TO PROBLEM

The present inventors diligently continued to conduct study on cracks reaching a conductor in a multilayer insulated covering. As a result, the present inventors found that control of interlayer adhesion of the multilayer insulated covering, which was considered to be important in performance or appearance of an insulated wire, and necessary to be improved, is related with the cracks reaching the conductor in the multilayer insulated covering. When the present inventors further continued to conduct study, the present inventors found that, in the case where a thermoplastic resin layer is formed on an enamel-baked layer in which a predetermined amount of organic solvent having a specific boiling point is daringly allowed to remain, the interlayer adhesion between the enamel-baked layer and the thermoplastic resin layer is not significantly reduced, and occurrence of the cracks reaching the conductor in the multilayer insulated covering can be prevented. The present inventors also found that an effect of preventing occurrence of cracks reaching the conductor is further enhanced, preferably, by selecting layer structure of the multilayer insulated covering, a kind or properties of a resin that forms each layer and the like.

The present invention has been made based on those findings.

The above-described problems of the present invention can be solved by the following means.

(1) An insulated wire, having a thermosetting resin layer, directly or by interposing an insulated layer, on a conductor having a rectangular cross-section, and a thermoplastic resin layer on the thermosetting resin layer, wherein the thermosetting resin layer is formed of a thermosetting resin; the thermoplastic resin layer is formed of a thermoplastic resin; and wherein the insulated wire contains a liquid component that is liquid at 25°C, and has a boiling point of 150°C or higher in a proportion of 1,000 ppm or more and 20,000 ppm or less in the thermosetting resin layer.

(2) The insulated wire described in the above item (1), wherein a thermoplastic resin which forms the thermoplastic resin layer is a crystalline thermoplastic resin.

(3) The insulated wire described in the above item (1) or (2), wherein the liquid component is at least one kind of solvent selected from the group consisting of N,N-dimethylacetamide, N-methyl-2-pyrrolidone, N,N-dimethylformamide, cresol, phenol, halogenated phenol, and dimethylsulfoxide.

(4) The insulated wire described in any one of the above items (1) to (3), wherein the thermoplastic resin layer is provided directly on an intermediate layer formed of a non-crystalline thermoplastic resin.

(5) The insulated wire described in any one of the above items (1) to (4), wherein at least one kind of a thermosetting resin which forms the thermosetting resin layer is a thermosetting resin selected from the group consisting of polyimide, polyamideimide, Class H polyester and polyesterimide.

(6) The insulated wire described in the above item (4) or (5), wherein the intermediate layer contains at least one kind of inorganic particles selected from the group consisting of silicon oxide, titanium oxide, zinc oxide, magnesium oxide, aluminum oxide, and barium titanate.

(7) A coil formed by winding processing the insulated wire described in any one of the above items (1) to (6).

(8) Electrical/electronic equipment, having the coil described in the above item (7).

In the present invention, "layer formed of resin" means the layer is formed of the resin, and also referred to as "resin layer."

ADVANTAGEOUS EFFECTS OF INVENTION

The present invention enables to provide an insulated wire having a multilayer insulated covering in which the cracks reaching the conductor are hard to occur, and having high reliability, and a coil and electrical equipment using the insulated wire.

Other and further features and advantages of the invention will appear more fully from the following description, appropriately referring to the accompanying drawings.

BRIEF DESCRIPTION OF DRAWINGS

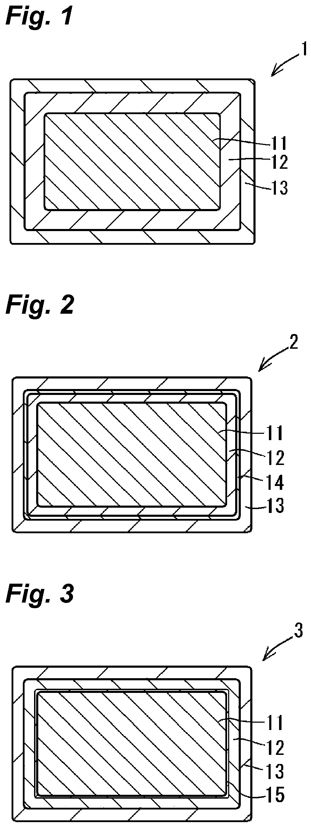

{Fig. 1}
Fig. 1 is a schematic cross-sectional view showing a preferred embodiment of the insulated wire of the present invention.
{Fig. 2}
Fig. 2 is a schematic cross-sectional view showing another preferred embodiment of the insulated wire of the present invention.
{Fig. 3}
Fig. 3 is a schematic cross-sectional view showing still another preferred embodiment of the insulated wire of the present invention.

MODE FOR CARRYING OUT THE INVENTION

<<Insulated wire>>

The electrical insulated wire (also referred to as insulated wire) of the present invention has a conductor, a thermosetting resin layer, directly or by interposing an insulated layer, on the conductor, and a thermoplastic resin layer on the thermosetting resin layer. The electrical insulated wire of the present invention contains a liquid component that is liquid at 25°C, and has a boiling point of 150°C or higher in a proportion of 1,000 ppm or more and 20,000 ppm or less in the thermosetting resin layer.

In the present invention, a multilayer insulated covering has a layer structure including a thermosetting resin layer and a thermoplastic resin layer. Further, an intermediate layer may be provided between a thermosetting resin layer and a thermoplastic resin layer.

In the present invention, an insulated layer, a thermosetting resin layer, a thermoplastic resin layer, and an intermediate layer each may be one layer or may be formed of a plurality of layers including two or more layers, respectively.

In the present invention, in the case where the layers in which the resins constituting (forming) the layers and additive contained are completely the same are laminated adjacent to each other, such layers are regarded as one layer in all.

On the other hand, in the case where even the layers in which the resins constituting (forming) the layers and the additives contained are completely the same are not laminated adjacent to each other, namely in the case where the layers are laminated by interposing any other layer, each layer is regarded as one layer.

Moreover, in the case where the layers in which the layers are formed of the same resin, but kinds of additives or amounts of compounding of the additives are different are laminated, it is reasonable that each layer is regarded as one layer, regardless of whether or not the layers are adjacent to each other.

Hereinafter, preferable embodiments of the insulated wire of the present invention will be explained, with reference to the drawings. But the present invention is not meant to be limited by these.

A preferred insulated wire 1 of the present invention, a cross-sectional view of which is shown in Fig. 1 has a conductor 11, a thermosetting resin layer 12 provided on outer periphery of the conductor 11, and a thermoplastic resin layer 13, as an outermost layer, provided on outer periphery of the thermosetting resin layer 12.

A preferred insulated wire 2 of the present invention, a cross-sectional view of which is shown in Fig. 2 is the same as the insulated wire 1 except that an intermediate layer is provided. The insulated wire 2 has a conductor 11, a thermosetting resin layer 12, an intermediate layer 14 formed of a non-crystalline thermoplastic resin, provided on outer periphery of the thermosetting resin layer 12, and a thermoplastic resin layer 13, as an outermost layer, provided on outer periphery of the intermediate layer 14. In addition, in Fig. 2, even if the intermediate layer 14 contains inorganic particles, illustration of the inorganic particles is omitted.

A preferred insulated wire 3 of the present invention, a cross-sectional view of which is shown in Fig. 3 is the same as the insulated wire 1 except that an insulated layer is provided. The insulated wire 3 has a conductor 11, an insulated layer 15 provided on outer periphery of the conductor 11, a thermosetting resin layer 12 provided on outer periphery of the insulated layer 15, and a thermoplastic resin layer 13. In addition, although not shown, an intermediate layer 14 may be provided in the insulted wire 3.

Hereinafter, the insulated wire of the present invention is described in order from a conductor.

<Conductor>

As the conductor used in the present invention, use may be made of any conductor that is usually used in insulated wires and examples thereof include a metal conductor such as a copper wire and an aluminum wire. The conductor is a conductor of preferably a low-oxygen copper whose oxygen content is 30 ppm or less, and more preferably a low-oxygen copper whose oxygen content is 20 ppm or less or oxygen-free copper. When the conductor is melted by heat for the purpose of welding if the oxygen content is 30 ppm or less, voids caused by contained oxygen are not occurred at a welded portion, the deterioration of the electrical resistance of the welded portion can be prevented, and the strength of the welded portion can be secured.

A conductor used in the present invention is the conductor whose cross-sectional shape is rectangular. The rectangular conductor has higher space factor with respect to the stator slot at the time of winding, compared to a round conductor. Accordingly, the rectangular conductor is preferably used for this purpose.

In view of suppressing a partial discharge from a corner portion, the rectangular conductor has preferably such a shape that chamfered edges (curvature radius r) are provided at four corners as shown in Figs. 1 to 3. The curvature radius r is preferably 0.6 mm or less and more preferably in a range from 0.2 to 0.4 mm.

The size of the conductor is not particularly limited, but the width (long side) thereof is preferably from 1 to 5 mm, and more preferably from 1.4 to 4.0 mm, and the thickness (short side) is preferably from 0.4 to 3.0 mm, and more preferably from 0.5 to 2.5 mm. The ratio of length of the width (long side) to the thickness (short side) is preferably from 1:1 to 4:1.

<Thermosetting resin layer>

In the present invention, the insulated wire has at least one thermosetting resin layer 12 formed of a thermosetting resin as the enamel-baked layer.

The enamel-baked layer is formed by coating and baking a resin varnish on a conductor. The enamel-baked layer which is the thermosetting resin layer may be formed directly on the outer periphery of the conductor, or may be formed by interposing, for examples, an insulated layer described below.

A varnish used contains a thermosetting resin.

The thermosetting resin is a thermosetting resin capable of forming an insulated film by coating and baking it on a conductor 11. Examples thereof include polyimide (PI), polyurethane, polyamideimide (PAI), a thermosetting polyester (PEst), Class H polyester (HPE), polybenzimidazole, polyesterimide (PEsI), a melamine resin, an epoxy resin, and so on.

In the present invention, as a thermosetting resin, a thermosetting resin selected from the group consisting of polyimide, polyamideimide, Class H polyester and polyesterimide is particularly preferable.

The polyimide is not particularly limited, but any of polyimide resins such as a whole aromatic polyimide and a thermosetting aromatic polyimide may be used. For example, use may be made of a commercially available product (for example, trade name, HI 406, manufactured by Hitachi Chemical Co., Ltd.). Or use may be made of polyimides obtained by a usual method in which an aromatic tetracarboxylic dianhydride and aromatic diamines are reacted in a polar solvent to obtain a polyamide acid solution, and then the obtained polyamide acid solution is subjected to imidization by a thermal treatment at the time of baking in formation of the coating.

The polyamideimide only needs to be thermosetting. As the polyamideimide, use may be made of a commercially available product (for example, trade name, U IMIDE, manufactured by Unitika Ltd.; trade name, U-VARNISH, manufactured by Ube Industries, Ltd.; and HCI-series, manufactured by Hitachi Chemical Co., Ltd.). Or use may be made of polyamideimides obtained by a usual method, for example, a method in which a tricarboxylic anhydride and diisocyanates are directly reacted in a polar solvent, or a method in which diamines are reacted with a tricarboxylic anhydride in a polar solvent to previously introduce an imide bond to the reaction product, and then the reaction product is subjected to amidation using diisocyanates. Note that the polyamideimide has the properties of a lower thermal conductivity and a higher dielectric breakdown voltage than other resins, and has bake hardenability.

The Class H polyester means an aromatic polyester resin modified by adding thereto a phenol resin or the like and the heat resistant grade thereof is Class H. Examples of commercially available Class H polyesters include ISONEL200 (trade name, manufactured by Schenectady International Inc.).

Polyesterimide only needs to be a polymer having an ester bond and an imide bond in a molecule, and to be thermosetting, and a commercially available product such as trade name: Neoheat 8600A, manufactured by Toutoku Toryo Co., Ltd., can be used, for example.

Moreover, the polyesterimide is not particularly limited. For example, polyesterimide can be used as obtained by forming the imide bond from tricarboxylic anhydride and amine, forming the ester bond from alcohol and carboxylic acid or alkyl ester thereof, and then a free acid group or an anhydride group of the imide bonding reacting in an ester-forming reaction. As such polyesterimide, polyesterimide can also be used as obtained by allowing tricarboxylic anhydride, a dicarboxylic acid compound or alkyl ester thereof to react with an alcohol compound and a diamine compound by a publicly known method.

Regarding these thermosetting resins, only one kind thereof may be used alone, or more than one kind thereof may be used by mixture.

Further, in the case where a thermosetting resin layer is formed of a plurality of layers, the thermosetting resins which are different from each other in each layer may be used, or thermosetting resins whose mixing ratios are different from each other in each layer may be used.

The resin varnish used in the present invention may contain various kinds of additives or the like, such as a cell nucleating agent, an oxidation inhibitor, an antistatic agent, an anti-ultraviolet agent, a light stabilizer, a fluorescent brightening agent, a pigment, a dye, a compatibilizing agent, a lubricating agent, a reinforcing agent, a flame retardant, a crosslinking agent, a crosslinking aid, a plasticizer, a thickening agent, a thinning agent, and an elastomer, to the extent that the characteristics are not affected. Furthermore, a layer formed from a resin containing these additives may be laminated on the resulting insulated wire, or the insulated wire may be coated with a coating material containing these additives.

A powder having a high aspect ratio such as a glass fiber and a carbon nanotube may be added to a coating material and the obtained resin varnish may be baked in order to improve a tensile modulus of the thermosetting resin layer. By addition of such powder, the powder is aligned in the flow direction of the wire at the processing, so that the wire is strengthened in the bend direction.

The resin varnish contains an organic solvent and the like so as to make the thermosetting resin be a varnish. The organic solvent is not particularly limited as long as the organic solvent does not inhibit the reaction of the thermosetting resin, and examples thereof include amide-based solvents such as N-methyl-2-pyrrolidone (NMP), N,N-dimethylacetamide (DMAC), and N,N-dimethylformamide; urea-based solvents such as N,N-dimethylethyleneurea, N,N-dimethylpropyleneurea, and tetramethylurea; lactone-based solvents such as $\gamma$-butyrolactone and $\gamma$-caprolactone; carbonate-based solvents such as propylene carbonate; ketone-based solvents such as methyl ethyl ketone, methyl isobutyl ketone, and cyclohexanone; ester-based solvents such as ethyl acetate, n-butyl acetate, butyl cellosolve acetate, butyl carbitol acetate, ethyl cellosolve acetate, and ethyl carbitol acetate; glyme-based solvents such as diglyme, triglyme, and tetraglyme; hydrocarbon-based solvents such as toluene, xylene, and cyclohexane; phenol-based solvents such as cresol, phenol, halogenated phenol; sulfone-based solvents such as sulfolane; and dimethylsulfoxide (DMSO).

Of these organic solvents, in view of high solubility, high reaction promotion properties and the like, amide-based solvents, phenol-based solvents, and urea-based solvents are preferred; and in view of a solvent without a hydrogen atom that is apt to inhibit a crosslinking reaction due to heating, amide-based solvents, phenol-based solvents, urea-based solvents, and dimethylsulfoxide are preferred; amide-based solvents and dimethylsulfoxide are particularly preferred.

On the other hand, as mentioned later, in the case where the organic solvent and the like in the resin varnish are allowed to remain in the thermosetting resin layer as the liquid component, one having a boiling point of 150°C or higher is used as at least one kind of organic solvent. As such solvents, amide-based solvents, phenol-based solvents, and dimethylsulfoxide are preferred. Among them, a solvent selected from the group consisting of N,N-dimethylacetamide, N-methyl-2-pyrrolidone, N,N-dimethylformamide, dimethylsulfoxide, cresol, phenol, and halogenated phenol.

Regarding the organic solvent and the like, one kind may be used alone, or two or more kinds may be used in mixture.

In order that the number of passages through a baking furnace can be reduced, and adhesion between the conductor and the enamel-baked layer can be prevented from being extremely lowered, and in order that the number of passages through a baking furnace can be reduced, and the organic solvent and the like in the resin varnish is allowed to remain in a desired amount as the liquid component, a thickness of the enamel-baked layer is preferably 70 $\mu$m or less, further preferably 60 $\mu$m or less, and still further preferably 50 $\mu$m or less. Further, in order to prevent deterioration of voltage resistance or heat resistance, which are properties required for the enameled wires as insulated wires, it is preferable that the enamel-baked layer has a certain thickness. The lower limit of the thickness of the enamel-baked layer is not particularly limited, as long as it is a thickness where no pinholes are formed. The thickness of the enamel-baked layer is preferably 3 $\mu$m or more, more preferably 6 $\mu$m or more.

<Thermoplastic resin layer>

In the present invention, the thermoplastic resin layer 13 formed of a thermoplastic resin is provided, as an extrusion covering, directly or by interposing an intermediate layer, on the enamel-baked layer being the thermosetting resin layer.

An advantage of providing the thermoplastic resin layer as the extrusion covering resin layer is in no necessity of passing the wire through the baking furnace in a production process, and therefore in capability of suppressing volatilization of the organic solvent and the like in the resin varnish to facilitate adjustment of a remaining amount of organic solvent as the liquid component. Further, the advantage is to have a capability increasing the thickness of the insulted layer without growing the thickness of an oxide skin layer on the conductor.

The resin to be used in the extrusion covering resin layer is the thermoplastic resin, and above all, the thermoplastic resin having excellent heat resistance and chemical resistance is preferable. As such thermoplastic resin, a crystalline thermoplastic resin, for example, is preferably used in the present invention.

In the present invention, the term "crystalline" means a property of capable of having a regularly arranged crystalline structure in at least a part of the polymer chain. On the other hand, the term "non-crystalline" means to maintain an amorphous condition which has almost no crystalline structure and means such a property that the polymer chain becomes a random condition in curing.

In the case where the thermoplastic resin layer is formed of the crystalline thermoplastic resin, even if the liquid component contained in the thermosetting resin layer is evaporated and vaporized, the liquid component can be prevented from being diffused and discharged to an outside of the insulated wire. This reason is not known exactly yet, but it is considered that the crystalline thermoplastic resin is known to be high in gas barrier properties to retain the liquid component inside the thermoplastic resin layer by the properties, and to effectively suppress diffusion and discharge of the liquid component to the outside of the insulated wire.

In the present invention, crystallinity of the crystalline thermoplastic resin is not particularly limited, and is preferably 30 to 100%, and further preferably 50 to 100%, for example.

The crystallinity refers to a value that can be measured by applying differential scanning calorimetry (DSC) to show a degree at which the crystalline thermoplastic resin is arranged in a regulated manner. As the crystallinity, for example, in the case where polyphenylene sulfide (PPS) is used as the thermoplastic resin, a proper amount in a non-foamed region is collected, and temperature is raised at a rate of 5°C/min to calculate an endothermic quantity (melting heat quantity) caused by melting as found in a region exceeding 300°C, and an exothermic quantity (crystallization heat quantity) caused by crystallization as found in a region around 150°C, and a differential of the heat quantity obtained by subtracting the crystallization heat quantity from the melting heat quantity relative to the melting heat quantity is taken as the crystallinity. The calculation formula is shown below.

Calculation formula: crystallinity (%) = [(melting heat quantity) -

(crystallization heat quantity) / (melting heat quantity)] ×100

Also in the case where a crystalline thermoplastic resin other than PPS is used, although a melting thermal peak and a crystallization thermal peak are different therefrom, the crystallinity can be calculated in a manner similar to the above-described calculation formula.

The crystallinity can be adjusted by preheating the conductor immediately before molding of the thermoplastic resin layer, for example. In general, in the case where a preheating temperature on the conductor is significantly lower than a temperature of molding the thermoplastic resin layer, the crystallinity is low, and in the case where the preheating temperature is higher, the crystallinity of the thermoplastic resin becomes high.

Examples of the thermoplastic resin which can be used for the present invention include: general-purpose engineering plastics such as polyamide (also referred to as nylon), polyacetal (POM), polycarbonate (PC), polyphenylene ether (PPE, including a modified polyphenylene ether), syndiotactic polystyrene resin (SPS), polybutylene terephthalate (PBT), polyethylene terephthalate (PET), polyethylene naphthalate (PEN), and ultrahigh molecular weight polyethylene; and in addition, super engineering plastics such as polyetherimide (PEI), polyphenylsulfone (PPSU), polysulfone (PSU), polysulfone (PSF), polyether sulfone (PES), polyphenylene sulfide, polyarylate (PAR), polyamideimide, polyether ketone (PEK), polyarylether ketone (PAEK), tetrafluoroethylene/ethylene copolymer (ETFE), polyether ether ketone (PEEK, including a modified PEEK), polyether ketone ketone (PEKK), tetrafluoroethylene/perfluoalkylvinylether copolymer (PFA), polytetrafluoroethylene (PTFE),a thermoplastic polyimide resin (TPI), thermoplastic polyamideimide (PAI), and a liquid crystal polyester; and further polymer alloys containing the foregoing engineering plastics such as a polymer alloy composed of polyethylene terephthalate (PET) or polyethylene naphthalate (PEN) as a base resin, ABS/polycarbonate, NYLON 6,6, aromatic polyamide resin, polyphenylene ether/NYLON 6,6, polyphenylene ether/polystyrene, and polybutylene terephthalate/polycarbonate.

Among above-described thermoplastic resins, examples of crystalline thermoplastic resins include: general-purpose engineering plastics such as polyamide, a syndiotactic polystyrene resin, polyacetal, polybutylene terephthalate, polyethylene terephthalate, and ultrahigh molecular weight polyethylene; and polyphenylene sulfide, polyether ether ketone, polyarylether ketone, polyether ketone ketone, and a thermoplastic polyimide resin.

From the viewpoints of chemical resistance, heat resistance, and stress crack resistance, polyphenylene sulfide, polyether ether ketone, polyarylether ketone, polyether ketone ketone, polyamide (particularly nylon 6,6), polyether ketone are preferable.

Specific examples of PEEK include commercially available products such as KetaSpire KT-820 (trade name, manufactured by Solvay Specialty Polymers K.K.), PEEK450G (trade name, manufactured by Victrex Japan Inc.). Specific examples of modified PEEK include commercially available products of AVASPIRE AV-650 (trade name, manufactured by Solvay Specialty Polymers K.K.). Specific examples of TPI include commercially available products of AURUM PL 450C (trade name, manufactured by Mitsui Chemicals, Inc.). Specific examples of PPS include commercially available products such as FORTRON 0220A9 (trade name, manufactured by Polyplastics Co., Ltd.), and PPS FZ-2100 (trade name, manufactured by DIC Corporation). Specific examples of SPS include commercially available products of XAREC S105 (trade name, manufactured by Idemitsu Kosan Co., Ltd.). Specific examples of thermoplastic PA include commercially available products such as FDK-1 (trade name, NYLON 6,6, manufactured by UNITIKA LTD.), F-5000 (trade name, NYLON 4,6, manufactured by UNITIKA LTD.), ARLENE AE-420 (trade name, NYLON 6,T, manufactured by Mitsui Chemicals, Inc.), and GENESTOR N-1006D (trade name, NYLON 9,T, manufactured by KURARAY CO., LTD.).

Examples of the modified PEEK include PEEK-based PPS, PES, PPSU or PEI polymer alloys and, for example, trade name: AVASPIRE AV-621, AV-630, AV-651, AV-722, AV-848, and the like, manufactured by Solvay Specialty Polymers K.K., can be used.

It is needless to say that the resin to be used is not limited by the above-described resin names, and resins other than those recited above also can be used, as long as they are superior in performance to those resins.

Regarding these thermoplastic resins, only one kind thereof may be used alone, or more than one kind thereof may be used by mixture.

Moreover, in the case where the thermoplastic resin layer is formed of a plurality of layers, a thermoplastic resin different from each other in each layer may be used, or a thermoplastic resin whose mixing ratio is different from each other in each layer may be used.

In the case where more than one kind of thermoplastic resin are used in mixture, for example, both resins can be used by subjecting them to polymer alloy thereby making a compatible type uniform mixture, or can be used by forming a non-compatible blend into a compatible state with a compatibilizing agent.

In the present invention, the above-mentioned various additives may be contained in a raw material from which the thermoplastic resin layer is obtained within the range in which properties are not influenced. Furthermore, a layer formed from a resin containing these additives may be laminated on the resulting insulated wire, or the insulated wire may be coated with a coating material containing these additives.

A thickness of the thermoplastic resin layer is not particularly limited, and is preferably 30 to 300 $\mu$m. In the case where the thickness of the thermoplastic resin layer is within the above-described range, the wire is excellent in insulation performance and bending processability. In the present invention, the thickness of the thermoplastic resin layer is further preferably 40 to 150 $\mu$m, and still further preferably 50 to 120 $\mu$m.

<Intermediate layer>

In the present invention, it is also preferable that an intermediate layer is provided between the thermosetting resin layer and the thermoplastic resin layer. As such an intermediate layer, a capturing layer for capturing and holding the liquid component therein, an adhesion layer for improving adhesion between the thermosetting resin layer and the thermoplastic resin layer, a capturing adhesion layer having both thereof, or the like is preferable.

With regard to the intermediate layer 14, as shown in Fig. 2, the thermoplastic resin layer 13 is preferably directly provided thereon.

The intermediate layer is formed of an appropriate resin according to the above-described function, and is preferably a non-crystalline resin layer formed of a non-crystalline resin. In the case where the intermediate layer, particularly the capturing layer or the capturing adhesion layer is formed of the non-crystalline resin, the liquid component can be effectively captured and held in the intermediate layer by dissolving the non-crystalline resin into the solvent.

As the non-crystalline resin that can be used in the present invention, a non-crystalline one among the above-described thermoplastic resins, for example, polyethersulfone, a non-crystalline syndiotactic polystyrene resin, polysulfone, or polyphenylene ether is preferable. Moreover, in addition thereto, for example, a syndiotactic polystyrene resin, polyetherimide, or polyphenylsulfone, all being non-crystalline, is preferable.

Specific examples of PES include commercially available products such as SUMIKA EXCEL 4800G (trade name, manufactured by Sumitomo Chemical Co., Ltd.), PES (trade name, manufactured by Mitsui Chemicals, Inc.), ULTRAZONE E (trade name, manufactured by BASF Japan Ltd.), and RADEL A (trade name, manufactured by Solvay Advanced Polymers Co.).

Specific examples of PPE include commercially available products such as XYRON (trade name, manufactured by Asahi Kasei Chemicals Corp.) and IUPIACE (trade name, manufactured by Mitsubishi Engineering Plastics Corp.).

Specific examples of PSU include a commercially available product of RADEL PSU (trade name, manufactured by Solvay Advanced Polymers Co.).

Specific examples of PEI include a commercially available product of ULTEM 1010 (trade name, manufactured by SABIC Innovative Plastics Holding BV).

Examples of PPSU include a commercially available product of RADEL R5800 (trade name, manufactured by Solvay Advanced Polymers Co.).

Regarding the non-crystalline resin, one kind may be used alone, or two or more kinds may be used in mixture.

Moreover, in the case where the intermediate layer is formed of a plurality of layers, a non-crystalline resin different from each other in each layer may be used, or a non-crystalline resin whose mixing ratio is different from each other in each layer may be used.

In the present invention, the intermediate layer preferably contains inorganic particles. In the case where the intermediate layer contains the inorganic particles, when an evaporated liquid component is retained in an interface between the intermediate layer and the thermoplastic resin layer, reduction of adhesion force between the intermediate layer and the thermoplastic resin layer is induced, and occurrence of cracks reaching the conductor can be effectively prevented.

Such inorganic particles are not particularly limited, and specific examples include particles of inorganic oxide, and inorganic acid salt. Specific examples of the inorganic oxide include silicon oxide, titanium oxide, zinc oxide, magnesium oxide and aluminum oxide. Specific examples of the inorganic acid salt include barium titanate. Above all, at least one kind of inorganic particles selected from the group consisting of silicon oxide, titanium oxide, zinc oxide, magnesium oxide, aluminum oxide and barium titanate is preferable in view of a high effect of the inorganic particles on preventing the occurrence of cracks reaching the conductor.

A particle size of the inorganic particles is not particularly limited, but in view of inducing the adhesion force, but avoiding the reduction beyond necessity, a primary particle size is preferably 15 to 500 nm, and further preferably 15 to 100 nm. As a method of measuring the particle size, measurement can be carried out by using a dynamic light scattering/laser Doppler particle size analyzer (trade name: Nanotrac Wave-EX150, manufactured by Nikkiso Co., Ltd.).

A content of inorganic particles is not particularly limited, and is preferably 3 to 60 parts by mass, and further preferably 10 to 50 parts by mass, based on 100 parts by mass of the resin that forms the intermediate layer.

In the present invention, the intermediate layer may contain the above-mentioned various additives within the range in which properties are not influenced.

A thickness of the intermediate layer is preferably 2 to 20 $\mu$m, further preferably 3 to 15 $\mu$m, still further preferably 3 to 12 $\mu$m, particularly preferably 3 to 10 $\mu$m.

<Insulated layer>

In the present invention, an insulation layer may be provided between the conductor and the thermosetting resin layer, other than the intermediate layer. This insulated layer is a layer for insulating the conductor. As the resin that forms the insulated layer, any kind of resin may be used, as long as the resin causes no poor appearance during baking the resin varnish or causes no significant reduction of the adhesion with the conductor 11 and with the thermosetting resin layer 12. Examples of such resin include a thermoplastic resin such as polyurethane and polyester, for example. The thickness of the insulted layer is preferably 1 to 20 $\mu$m.

The conductor 11 on which the insulated layer is formed is referred to as a covering conductor wire in several cases, and particularly the conductor having the insulated layer formed of polyurethane is referred to as a polyurethane wire in several cases.

<Liquid component>

The insulated wire of the present invention has the above-described structure, and contains the liquid component that is liquid at 25°C, and has the boiling point of 150°C or higher in the thermosetting resin.

The liquid component, if the liquid component is contained in the thermosetting resin, exhibits an effect on preventing the occurrence of cracks reaching the conductor. Accordingly, the liquid component only needs to exist at least in the thermosetting resin. This liquid component is exuded from the thermosetting resin over time, by heating or the like in several cases, for example. Accordingly, the liquid component may exist in each layer such as the intermediate layer, or may exist in an interlayer (interface). Upon acting of a stress on the thermoplastic resin layer, in the case where part of the liquid component exists in the interlayer between a layer adjacent to the thermosetting resin layer, and the thermosetting resin layer, the effect on preventing the occurrence of cracks reaching the conductor is enhanced in several cases.

Among the liquid components that exist between the thermosetting resin layer and the thermoplastic resin layer, between the thermosetting resin layer and the intermediate layers such as the adhesion layer or between the adhesion layer and the thermoplastic resin layer, or in each layer thereof, an influence by the liquid component exuded from the thermosetting resin layer is considered to be significant. Accordingly, an amount of liquid component to be exuded from the thermosetting resin layer can be adjusted by adjusting the content of liquid component in the thermosetting resin layer. Thus, as a result, an influence on cracking of the thermosetting resin layer can be controlled. Such control can be made by setting a remaining amount of organic solvent in the thermosetting resin layer to a predetermined range.

The liquid component is liquid at 25°C, namely the melting point is less than 25°C. Moreover, the liquid component has the boiling point of 150°C or higher. Such a liquid component exists in the form of liquid or gas, or in a state in which both are mixed, in the insulated wire. Thus, in the case where the stress that causes cracking acts on the thermoplastic layer, this stress is prevented from being propagated to a layer inner than the thermoplastic resin layer, and therefore cracking of the inner layer, preferably the thermosetting resin layer can be prevented.

In the case where the boiling point of the liquid component is less than 150°C, the liquid component is easy to vaporize to cause poor appearance of the insulated wire, and is poor in the effect on preventing the occurrence of cracks reaching the conductor in several cases. Further, when baking is performed in a shorter period of time in a furnace at a temperature higher than usual, evaporation of the liquid component is excessively fast, and therefore a reaction of curing the thermosetting resin is stopped on the way, and the properties as the insulated wire decline in several cases.

The boiling point of the liquid component is preferably 160°C or higher, further preferably 180°C or higher, and still further preferably 200°C or higher in view of the effect on preventing the occurrence of cracks reaching the conductor. On the other hand, an upper limit of the boiling point is not particularly limited, but is practically 300°C in consideration of possibility of adversely affecting the electrical equipment because the liquid component is liquid in the case where the liquid component is leaked from the insulated wire.

In the present invention, in the case where the liquid component exists during baking the resin varnish, the boiling point of the liquid component serves as a measure of order in which the liquid component is heated and evaporated in the furnace. However, when the resin varnish is used, a temperature at which the organic solvent starts evaporation is known to become significantly lower than the boiling point of the organic solvent as an elementary substance.

Such a liquid component is not particularly limited, and is preferably synonymous with the components listed as the organic solvent used in the above-described resin varnish, and also preferable components are the same therewith. Thus, according to a process of forming the thermosetting resin layer, the liquid component can be incorporated thereinto, and the content becomes easy to be adjusted.

The content of liquid component is 1,000 ppm or more and 20,000 ppm or less, based on the total mass of the thermosetting resin layer. Here, the total mass of the thermoplastic resin layer obviously includes the mass of the liquid component contained in the thermoplastic resin layer, but in the case where the content of liquid component is less than 1,000 ppm, an effect of incorporating the liquid component thereinto is poor, and the occurrence of cracks reaching the conductor cannot be prevented in several cases. On the other hand, in the case where the content exceeds 20,000 ppm, the adhesion of the thermoplastic resin layer is significantly reduced, and the function as the insulated wire is not sufficiently developed in several cases. Moreover, appearance thereof becomes poor in several cases.

In view of capability of satisfying any of the effects on preventing the occurrence of cracks reaching the conductor, the adhesion and the appearance, the content of liquid component is preferably 1,000 to 10,000 ppm.

In the present invention, the reason why the occurrence of cracks reaching the conductor in the multilayer insulated covering can be prevented in the case where the liquid component is contained at the above-described content is not known exactly yet. However, it is considered as described below. In addition, the multilayer insulated covering formed of the thermosetting resin layer and the thermoplastic resin layer is described in the following, but even in the case where the multilayer insulated covering has the intermediate layer, the description is similar, and the effect on preventing the occurrence of cracks reaching the conductor is enhanced. Moreover, an effect superior to the effect on preventing the occurrence of cracks reaching the conductor as described later can be obtained by selecting the structure and the like of the multilayer insulated covering as described above, which is as described above.

In the case where the insulated wire is used under a high temperature environment, stress of thermal shrinkage is caused by thermal shrinkage, and if the insulated wire is allowed winding process, an excessive mechanical stress acts or remains thereon. Cracks occur in the thermoplastic resin layer by such stress, in several cases.

However, in the insulated wire containing the liquid component in the thermosetting resin layer according to the present invention, the adhesion between the thermoplastic resin layer and the thermosetting resin layer is reduced by the liquid component. Accordingly, the above-described stress that acts on or remains in the thermoplastic resin layer is not propagated to the thermosetting resin layer while the stress holds magnitude at which the thermosetting resin layer is cracked. Even if the above-described stress should be propagated to the thermosetting resin layer, the thermosetting resin layer causes interlayer peeling from the thermoplastic resin layer before the thermosetting resin layer is cracked.

The liquid component migrates over time to the interface with the thermoplastic resin layer while a liquid state is kept, and particularly in the case where the insulated wire of the present invention is used under a high temperature environment, the liquid component migrates to the interface with the thermoplastic resin layer in several cases. Thus, the above-described adhesion is effectively reduced. In general, it is considered that different kinds of components are easily accumulated, whether liquid or gas, in the interlayer of multilayered structure prepared by using different resins or under different molding conditions, and the liquid component also migrates thereto as described above.

Moreover, in the case where the liquid component exists in the interlayer, the above-described adhesion is reduced, and also the stress propagated to the liquid component is absorbed in the liquid component, and hardly propagated to the thermosetting resin layer.

Thus, the liquid component reduces the adhesion of the thermoplastic resin layer, and also absorbs the stress, irrespective of the state (liquid or gas) and a position of existence.

Thus, it is considered that the cracks reaching the conductor are hard to occur in the multilayer insulated covering of the insulated wire of the present invention.

When the organic solvent in the resin vanish is allowed to remain, the content of liquid component can be set in a predetermined range depending on conditions of baking the resin varnish, for example, any one of a passing time (linear speed) or a baking time upon conveying an enameled wire in the baking furnace, and a furnace temperature, the boiling point of the organic solvent and also a heating system.

Moreover, the content can be set in the predetermined range by bringing, after baking the thermosetting resin, the liquid component into contact with the thermosetting resin layer by spraying the liquid component and the like thereon to penetrate the liquid component into the layer.

Details of these methods, conditions and the like are described later.

A method of identifying the liquid component and a method of measuring the content are described later.

As described above, the cracking caused in the thermoplastic resin layer as the covering resin layer can be prevented from reaching the thermosetting resin layer by using the insulated wire of the present invention, namely, by incorporating the above-described liquid component into the thermosetting resin layer in a proportion of 1,000 ppm or more and 20,000 ppm or less in a multilayer insulated coating of the insulated wire. As a result, the cracks reaching the conductor can be prevented.

<<Method of producing an insulated wire>>

The insulated wire can be produced by sequentially forming, on the periphery of the conductor, if desired, the insulated layer, the thermosetting resin layer, preferably the intermediate layer, and the thermoplastic resin layer.

The insulated layer can be formed by applying, on the periphery of the conductor, the thermoplastic resin such as polyurethane and baking it.

<Method of forming thermosetting resin layer>

The thermosetting resin layer is formed by applying, on the conductor or the insulated layer, the resin varnish and baking it. The baking of the resin varnish may be performed once, but is ordinarily preferably repeated several times. When the baking is repeated several times, both identical baking conditions and different baking conditions are acceptable. The method of coating the resin varnish may be in a usual manner. Examples of the coating method include a method of employing a die for a varnish coating, which has been manufactured so as to be similar to the shape of the conductor, and a method of employing a die that is called "universal die", which has been formed in a curb shape when the cross-section shape of the conductor is quadrangular.

The conductor having the resin varnish coated thereon is baked by a baking furnace in a usual manner. Although specific baking conditions depend on the shape of a furnace to be used, in the case where the furnace is an about 5 m-sized vertical furnace by natural convection, the baking can be achieved by setting the passing time period to 10 to 90 sec at the furnace temperature of 400 to 650°C in the usual baking conditions. The setting can be made in the range of 400 to 700°C for the furnace temperature in terms of facilities.

In order to allow the organic solvent in the resin varnish to remain as the liquid component by forming the thermosetting resin layer in the present invention, the above-described conditions of baking the resin varnish and the like are preferably further adjusted.

A content of organic solvent (remaining amount) is increased when the passing time is shortened, or the furnace temperature is decreased among the baking conditions. Moreover, a heating time is shortened by using a baking furnace having a shorter length even if a setting temperature is the same. Thus, the content of organic solvent can be effectively increased.

(Method of bake curing of thermosetting resin)

Specific examples of a preferable method include a method in which a thermosetting resin is cured at a certain degree in a short period of time by baking the thermosetting resin by increasing a baking temperature and/or a linear speed by using a natural convection type baking furnace and the like.

Moreover, specific examples of another preferable method include a method in which a thermosetting resin is cured while evaporation of an organic solvent in a resin varnish is suppressed according to a heating system in which no hot air is applied thereto (referred to as a draught-free heating system as a matter of convenience), such as an electrical furnace.

In these methods, curing of the thermosetting resin can also be completed according to a radiation heating system and the like. Details are described later.

(Comparison between method in which natural convection type baking furnace is used and method in which draught-free heating type baking furnace is used)

The temperature and the linear speed in the method in which the above-described natural convection type baking furnace is used all depend on the boiling point of the organic solvent to be used, and the like. For example, in the case where a 5 m-long vertical furnace of natural convection type is used, as baking conditions, the furnace temperature can be set within the range of 600 to 700°C, and preferably 620 to 700°C, and the passing time can be set within the range of 10 to 20 seconds, respectively.

Heating conditions in the above-described draught-free heating type baking furnace all depend on, in a manner similar to the preferable method in which the above-described natural convection type baking furnace is used, but for example, the conditions are preferably same with or somewhat higher than a heating temperature and a heating time (linear speed) in the method in which the above-described natural convection type baking furnace is used. For example, 640 to 720°C are preferable.

In a natural convection system, a rate of evaporation of the organic solvent in the resin varnish can be increased by circulation of warmed dry air, and control of amount of the solvent is generally deemed to be hard. On the other hand, in the draught-free heating system, no draught is positively circulated, and therefore the rate of evaporation of the organic solvent can be reduced. Further, in the draught-free heating system at a higher temperature, a heat quantity to accelerate the reaction can be applied to a highly reactive thermosetting resin by many kinds of organic solvents or a content thereof, and therefore as a baking state, the curing of the thermosetting resin can be progressed to a state of satisfying the properties of the enameled wire even with many kinds of components of the organic solvents or a high content thereof.

Moreover, in addition to the above-described method, a method is also preferable in which baking is performed by using a baking furnace having a furnace length shorter than usual, and curing of the thermosetting resin is suitably progressed while evaporation of the organic solvent is further suppressed according to the draught-free heating system.

With regard to a linear speed in this method, the passing time in the baking furnace is preferably adjusted to be the same with the time in the method in which the above-described natural convection type baking furnace is used. In a similar manner, the baking temperature is preferably adjusted to be same with the temperature in the method in which the natural convection type baking furnace is used.

(Baking method in which reheating is performed according to radiation heating system after baking)

In the method in which the natural convection type baking furnace is used and the method in which heating is performed by the draught-free heating furnace, for example, when baking at a high linear speed is performed by using a baking furnace having a short furnace length, the organic solvent can be allowed to remain. However, progress of curing of the thermosetting resin is slack, and covering properties are not developed, in several cases. In order to suppress such a phenomenon, a method can be adopted in which heating is performed again at 800 to 1,200°C according to the above-described draught-free heating system or the radiation heating system using a tubular electrical furnace (trade name: TMF-300N, manufactured by AS ONE Corporation) and the like. The heating time on this occasion all depends on, but for example, can be adjusted to 10 seconds or less, and preferably several seconds of 5 seconds or less.

In this reheating, when the radiation heating system is adopted, a resin surface is rapidly heated and cured. Therefore, when the heating temperature and the heating time are suitably selected, a degree of curing the resin surface can be further increased by rapidly curing the resin in the vicinity of the surface of the thermosetting resin layer. Thus, the liquid component is easily confined into the thermosetting resin layer.

(Baking method in which reheating is performed according to radiation heating system after baking)

Further, as another method of adjusting the content of liquid component, such a method may be applied as the above-described preferable method or the above-described another preferable method, or a method in which a resin varnish is baked as usual and then an organic solvent is brought into contact with a surface of a thermosetting resin, for example, a method in which the organic solvent is sprayed thereon by an atomizer.

In this case, the organic solvent may be directly brought into contact with the thermosetting resin layer, and sprayed thereon, or a conductor covered with the thermosetting resin may be passed in an environment in which the organic solvent is sprayed in a mist form. Thus, the organic solvent can be easily penetrated into the thermosetting resin layer. In the method in which the organic solvent is directly sprayed thereon, a spray gun and the like can be used.

Examples of more specific conditions in these methods include conditions adopted in Examples as described later.

<Method of forming intermediate layer>

In the method of producing an insulated wire, if desired, the intermediate layer is formed on the periphery of the thermosetting resin layer.

The intermediate layer can be formed by coating the varnish in which the non-crystalline resin has dissolved in the organic solvent or the like on the enamel-baked layer by using a die having a shape similar to the shape of the conductor, and baking the coated varnish.

As the organic solvent for the varnish, the organic solvents exemplified in the above-described resin varnish are preferable.

Moreover, the specific baking conditions, although the conditions depend on the shape of the furnace to be used and the like, are preferably conditions described in the usual conditions in the thermosetting resin layer.

In the present invention, an intermediate layer can also be formed by an extrusion processing.

<Method of forming thermoplastic resin layer>

On a peripheral plane of the conductor on which the thermosetting resin layer or the intermediate layer is thus formed (also referred to as an enameled wire), a thermoplastic resin is extruded by using a co-extruder to form the thermoplastic resin layer.

When the intermediate layer is provided thereon, the thermoplastic resin into a melted state at a temperature higher than a glass transition temperature of the non-crystalline resin to be used in the intermediate layer is preferably extruded on the intermediate layer and brought into contact therewith, and an extrusion covering resin is thermally fused to the enamel-baked layer by interposing the intermediate layer to form the extrusion covering resin layer.

In addition, the thermoplastic resin layer can also be formed by using an organic solvent or the like and the thermoplastic resin.

The insulated wire of the present invention is applicable to a field which requires resistance to voltage and heat resistance, such as various kinds of electric equipment, preferably as coil formed by winding processing the wire. For example, the insulated wire of the present invention is used for a motor, a transformer and the like, which can compose high-performance electric equipment by being processed into a coil. In particular, the insulated wire is preferably used as a winding wire for a driving motor of HV and EV. As just described, the present invention can provide electric equipment, particularly a driving motor of HV and EV, equipped with a coil formed by winding processing the insulated wire. Meanwhile, in the case where the insulated wire of the present invention is used for a motor coil, it is also called an insulated wire for the motor coil.

In particular, the insulated wire having excellent effect of preventing occurrence of the cracks reaching the conductor according to the present invention is preferably used as a winding wire for a driving motor of HV or EV.

EXAMPLES

The present invention will be described in more detail based on examples given below, but the invention is not meant to be limited by these.

(Example 1)

In this example, an insulated wire 1 shown in Fig. 1 was produced.

As the conductor 11, a cross-section rectangular (long side 3.2 mm x short side 2.4 mm, curvature radius of chamfered edge at four corners r = 0.3mm) conductor (copper having an oxygen content of 15 ppm) was used.

In the formation of the thermosetting resin layer 12, a die having a shape similar to a shape of the thermosetting resin layer 12 formed on the conductor 11 was used. A 30 $\mu$m-thick thermosetting resin layer 12 was formed by coating a polyimide resin varnish on the conductor 11 by using the above-described die, and passing the resultant coated conductor through a natural convection type baking furnace set at a furnace temperature of 700°C and having a furnace length of 5 m at a speed at which a passing time became 10 seconds, and repeating the operations several times, and further reheating the resultant conductor for 1 second according to a radiation heating system by a tubular furnace at 1,000°C to obtain an enameled wire.

In Example 1, the polyimide resin varnish prepared by mixing 100 parts by mass of a commercially available polyimide resin varnish (trade name: U imide, containing 82% by mass of NMP (boiling point: 202°C) as a solvent, manufactured by Unitika Ltd.) and 20 parts by mass of DMAC (boiling point: 165°C) as an organic solvent was used.

The obtained enameled wire was used as a core wire, and as a screw of an extruder, a 30 mm full-flight screw in which L/D = 20 was used, and a compression ratio was adjusted to 3. A 110 $\mu$m-thick thermoplastic resin layer 13 was formed outside the thermosetting resin layer 12 by using polyether ether ketone (trade name: KetaSpire KT-820, manufactured by Solvay Specialty Polymers K.K.) as a thermoplastic resin and using an extrusion die enabling the outer shape of a cross-section of the thermoplastic resin layer 13 to be similar to the shape of the conductor 11, and performing extrusion covering of PEEK at 370°C (temperature of the extrusion die, the same shall apply hereinafter), to obtain the insulated wire 1 formed of a PEEK extrusion covering enameled wire.

(Example 2)

In this example, an insulated wire 2 shown in Fig. 2 was produced.

An enameled wire was obtained by forming a 40 $\mu$m-thick thermosetting resin layer 12 in the same manner as Example 1 except that the following polyamideimide resin varnish was used in place of the polyimide resin varnish, and the resultant coated conductor was passed through a natural convection type baking furnace set at 680°C and having a furnace length of 5 m at a speed at which the passing time became 12 seconds, and the resultant conductor was further reheated for 1 second according to a radiation heating system by a tubular furnace at 1,200°C in Example 1.

In Example 2, the polyamideimide resin varnish prepared by mixing 100 parts by mass of a commercially available polyamideimide resin varnish (trade name: HI 406, containing 25% by mass of NMP and 40% by mass of DMAC as a solvent, manufactured by Hitachi Chemical Co., Ltd.) and 20 parts by mass of NMP as an organic solvent was used.

Next, a varnish was prepared by dissolving 20 parts by mass of pellets of PPSU (trade name: Radel R5800, manufactured by Solvay Specialty Polymers K.K.) into 100 parts by mass of NMP, and dispersing 6 parts by mass of silicon oxide ($SiO_2$) particles (primary particle size: about 20 nm in average) thereinto.

An intermediate layer (capturing adhesion layer) 14 of a 5 $\mu$m-thick non-crystalline resin was formed by coating the obtained varnish on an enameled wire by using an die having a shape similar to the shape of the conductor 11, and the resultant coated enameled wire was passed through a natural convection type baking furnace set at 680°C and having a furnace length of 5 m at a speed at which the passing time became 12 seconds to obtain the enameled wire with the intermediate layer 14. In addition, in Fig. 2, illustration of inorganic particles is omitted.

The obtained enameled wire with the intermediate layer 14 was used as a core wire, and as a screw of an extruder, a 30 mm full-flight screw in which L/D = 20 was used, and a compression ratio was adjusted to 3. A 60 $\mu$m-thick thermoplastic resin layer 13 was formed outside the intermediate layer 14 by using PPS (trade name: PPS FZ-2100, manufactured by DIC Corporation) as a thermoplastic resin and using an extrusion die enabling the outer shape of a cross-section of the thermoplastic resin layer 13 to be similar to the shape of the conductor 11, and performing extrusion covering of PPS at 330°C, to obtain the insulated wire 2 formed of a PPS extrusion covering enameled wire.

(Example 3)

In this example, an insulated wire 2 shown in Fig. 2 was produced.

A 50 $\mu$m-thick thermosetting resin layer 12 was formed in the same manner as Example 2 except that the following polyamideimide resin varnish was used, and the resultant coated conductor was passed through a draught-free heating type baking furnace set at 700°C and having a furnace length of 8 m at a speed at which the passing time became 15 seconds, and no reheating according to a radiation heating system was performed in Example 2.

In Example 3, the polyamideimide resin varnish prepared by mixing 100 parts by mass of a commercially available polyamideimide resin varnish (trade name: HI 406, containing 25% by mass of NMP and 40% by mass of DMAC as a solvent, manufactured by Hitachi Chemical Co., Ltd.) and 20 parts by mass of NMP as an organic solvent was used.

DMF (boiling point: 153°C) was directly sprayed on the formed thermosetting resin layer 12 by using a spray gun, and treated into a state in which DMF existed in the covering to obtain an enameled wire.

As spraying conditions on this occasion, spraying was performed at a pressure of 0.1 MPa at room temperature by applying AccuCoat R&D Heated Spray System, manufactured by Spraying Systems Japan Co.

Next, a varnish was prepared by dissolving 20 parts by mass of PEI (trade name: ULTEM 1010, manufactured by SABIC Innovative Plastics Holding BV) into 100 parts by mass of NMP.

An intermediate layer (capturing adhesion layer) 14 of a 3 $\mu$m-thick non-crystalline resin was formed by coating the obtained varnish on an enameled wire by using an die having a shape similar to the shape of the conductor 11, and the resultant coated enameled wire was passed through a draught-free heating type baking furnace set at 575°C and having a furnace length of 8 m at a speed at which the passing time became 30 seconds to obtain the enameled wire with the intermediate layer 14.

The obtained enameled wire with the intermediate layer 14 was used as a core wire, and as a screw of an extruder, a 30 mm full-flight screw in which L/D = 20 was used, and a compression ratio was adjusted to 3. A 80 $\mu$m-thick thermoplastic resin layer 13 was formed outside the intermediate layer 14 by using PAEK (trade name: AVASPIRE AV-650, manufactured by Solvay Specialty Polymers K.K.) as a thermoplastic resin and using an extrusion die enabling the outer shape of a cross-section of the thermoplastic resin layer 13 to be similar to the shape of the conductor 11, and performing extrusion covering of PAEK at 370°C, to obtain the insulated wire 2 formed of a PAEK extrusion covering enameled wire.

(Example 4)

In this example, an insulated wire 1 shown in Fig. 1 was produced.

An enameled wire was obtained by forming a 30 $\mu$m-thick thermosetting resin layer 12 in the same manner as Example 1 except that the following Class H polyester varnish was used in place of the polyimide resin varnish, and the resultant coated conductor was passed through a draught-free heating type baking furnace set at 700°C and having a furnace length of 8 m at a speed at which the passing time became 20 seconds, and no reheating according to a radiation heating system was performed in Example 1.

In Example 4, as the Class H polyester varnish, a commercially available Class H polyester varnish (trade name: Neoheat 8200K, containing 25% by mass of cresol (boiling point: 191-202°C) and 25% by mass of phenol (boiling point: 181.7°C) as a solvent, manufactured by Toutoku Toryo Co., Ltd.,) was directly used.

The obtained enameled wire was used as a core wire, and as a screw of an extruder, a 30 mm full-flight screw in which L/D = 20 was used, and a compression ratio was adjusted to 3. A 90 $\mu$m-thick thermoplastic resin layer 13 was formed outside the thermosetting resin layer 12 by using PEKK (trade name: OXPEKK-IG100, manufactured by MaterialsOxford Performance Materials, Inc.) as a thermoplastic resin and using an extrusion die enabling the outer shape of a cross-section of the thermoplastic resin layer 13 to be similar to the shape of the conductor 11, and performing extrusion covering of PEKK at 340°C, to obtain the insulated wire 1 formed of a PEKK extrusion covering enameled wire.

(Example 5)

In this example, an insulated wire 2 shown in Fig. 2 was produced.

An enameled wire was obtained by forming a 70 $\mu$m-thick thermosetting resin layer 12 in the same manner as Example 1 except that the following polyesterimide resin varnish was used in place of the polyimide resin varnish, and the resultant coated conductor was passed through a natural convection type baking furnace set at 680°C and having a furnace length of 5 m at a speed at which the passing time became 8 seconds, and no reheating according to a radiation heating system was performed in Example 1.

In Example 5, the polyesterimide resin varnish prepared by mixing 100 parts by mass of a commercially available polyesterimide resin varnish (trade name: Neoheat 8600A, containing 25% by mass of cresol and 25% by mass of phenol as a solvent, manufactured by Toutoku Toryo Co., Ltd.,) and 20 parts by mass of NMP and 20 parts by mass of DMSO (boiling point: 189°C) as an organic solvent was used.

Next, a varnish was prepared by dissolving 20 parts by mass of PPSU (trade name: Radel R5800, manufactured by Solvay Specialty Polymers K.K.) into 100 parts by mass of NMP, and dispersing 5 parts by mass of titanium oxide (TiO$_2$) particles (primary particle size: about 20 nm in average) thereinto.

An intermediate layer (capturing adhesion layer) 14 of a 3 $\mu$m-thick non-crystalline resin was formed by coating the obtained varnish on an enameled wire by using an die having a shape similar to the shape of the conductor 11, and the resultant coated enameled wire was passed through a baking furnace set at 525°C and having a furnace length of 8 m at a speed at which the passing time became 15 seconds to obtain the enameled wire with the intermediate layer 14. In addition, in Fig. 2, illustration of inorganic particles is omitted.

Then, a 60 $\mu$m-thick thermoplastic resin layer 13 was formed in a manner similar to Example 1 to obtain the insulated wire 2 formed of a PEEK extrusion covering enameled wire.

(Example 6)

In this example, an insulated wire 3 shown in Fig. 3 was produced.

As a conductor 11, a polyurethane wire (manufactured by Furukawa Electric Co., Ltd., paint used: trade name: TPU5200, manufactured by Totoku Toryo Co., Ltd.) having an insulated layer 15 formed of a 5 μm-thick polyurethane resin on a peripheral plane of a rectangular conductor (cupper having an oxygen content of 15 ppm) having a cross-section rectangular (long side: 3.2 mm x short side: 2.4 mm, curvature radius of chamfered edge at four corners: r = 0.3 mm) was used.

An enameled wire was obtained by forming a 30 μm-thick thermosetting resin layer 12 in the same manner as Example 1 except that the following polyimide resin varnish was used in place of the polyimide resin varnish, and the resultant coated polyurethane wire was passed through a natural convection type baking furnace set at 700°C and having a furnace length of 5 m at a speed at which the passing time became 15 seconds (the passing time was different from that of Example 1), and no reheating according to a radiation heating system was performed in Example 1.

In Example 6, as the polyimide resin varnish, a commercially available polyimide resin varnish containing NMP as a solvent (trade name: U imide, manufactured by Unitika Ltd.) without adding DMAC was directly used.

Next, a varnish was prepared by dissolving 5 parts by mass of SPS (trade name: XAREC S105, manufactured by Idemitsu Kosan Co., Ltd.) into 100 parts by mass of tetrahydrofuran.

An intermediate layer (capturing adhesion layer) 14 of a 2 μm-thick non-crystalline resin was formed by coating the obtained varnish on an enameled wire by using an die having a shape similar to the shape of the conductor 11, and the resultant coated enameled wire was passed through a natural convection type baking furnace set at 700°C and having a furnace length of 5 m at a speed at which the passing time became 15 seconds to obtain the enameled wire with the intermediate layer 14.

The obtained enameled wire with the intermediate layer 14 was used as a core wire, and as a screw of an extruder, a 30 mm full-flight screw in which L/D = 20 was used, and a compression ratio was adjusted to 3. A 60 μm-thick thermoplastic resin layer 13 was formed outside the intermediate layer 14 by using NYLON 6,6 (also referred to as PA66, trade name: FDK-1, manufactured by UNITIKA LTD.) as a thermoplastic resin and using an extrusion die enabling the outer shape of a cross-section of the thermoplastic resin layer 13 to be similar to the shape of the conductor 11, and performing extrusion covering of PA66 at 290°C, to obtain the insulated wire 3 formed of a PA66 extrusion covering enameled wire.

(Example 7)

In this example, an insulated wire 1 shown in Fig. 1 was produced.

A 40 μm-thick thermosetting resin layer 12 was formed by baking a polyamideimide resin varnish to obtain an enameled wire in the same manner as Example 2 except that the resultant coated conductor was passed through a draught-free heating type baking furnace set at 680°C and having a furnace length of 8 m at a speed at which the passing time became 10 seconds, and no reheating according to a radiation heating system was performed in Example 2.

The obtained enameled wire was used as a core wire, and as a screw of an extruder, a 30 mm full-flight screw in which L/D = 20 was used, and a compression ratio was adjusted to 3. A 100 μm-thick thermoplastic resin layer 13 was formed outside the thermosetting resin layer 12 by using PEK (trade name: VICTREX HT-G22, manufactured by VICTREX) as a thermoplastic resin and using an extrusion die enabling the outer shape of a cross-section of the thermoplastic resin layer 13 to be similar to the shape of the conductor 11, and performing extrusion covering of PEK at 400°C, to obtain the insulated wire 1 formed of a PEK extrusion covering enameled wire.

(Comparative Example 1)

In this example, an insulated wire 1 shown in Fig. 1 was produced.

A 30 μm-thick thermosetting resin layer 12 was formed by baking a polyimide resin varnish to obtain an enameled wire in the same manner as Example 1 except that the resultant coated conductor was passed through a natural convection type baking furnace set at 600°C and having a furnace length of 8 m at a speed at which the passing time became 35 seconds, and no reheating according to a radiation heating system was performed in Example 1. Then, a 110 μm-thick thermoplastic resin layer 13 was formed in the same manner as Example 1 to obtain the insulated wire 1 formed of a PEEK extrusion covering enameled wire.

(Comparative Example 2)

In this example, an insulated wire 1 shown in Fig. 1 was produced.

In Comparative Example 2, a 50 μm-thick thermosetting resin layer was formed by using the Class H polyester varnish used in Example 4, and passing the resultant coated conductor through a natural convection type baking furnace set at a furnace temperature of 600°C and having a furnace length of 8 m at a speed at which the passing time became 30 seconds, and further reheating the resultant conductor for 1 second according to a radiation heating system by a tubular furnace at 1,000°C, in which the solvent component contained in the Class H polyester varnish is minimized as much as possible by heating the resultant conductor in the tubular furnace. Subsequently, as an organic solvent, a solvent prepared by mixing 20 parts by mass of xylene (boiling point: about 140°C) and 100 parts by mass of toluene (boiling point: 110°C) was directly sprayed on the thermosetting resin layer to obtain an HPE enameled wire. As spraying conditions on this occasion, spraying coating was performed at a pressure of 0.1 MPa at room temperature.

In Comparative Example 2, as the Class H polyester varnish, a commercially available Class H polyester varnish (trade name: Neoheat 8200K, manufactured by Toutoku Toryo Co., Ltd.,) was directly used.

Then, a 50 μm-thick thermoplastic resin layer 13 was formed in a manner similar to Example 1 to obtain the insulated wire 1 formed of a PEEK extrusion covering enameled wire.

The following measurement and evaluations were carried out on the insulated wires each prepared as described above.

The obtained results are described in the following Table 1 as a whole.

[Identification of liquid component and measurement of content (remaining amount) thereof]

With regard to each insulated wire, the thermoplastic resin layer was peeled from the wire, and subsequently the thermosetting resin layer was peeled from the conductor. Then, 3 mg of coating of the obtained thermosetting resin layer was accurately weighed. The obtained sample was thermally decomposed at a thermal decomposition temperature of 400°C, and evaporated liquid components were analyzed by gas chromatography to identify kinds and calculate a content thereof. Table 1 shows the kinds and a total content of liquid components detected.

[Notched edgewise bending test]

Edgewise bending means a method of bending the insulated wire with one of edge planes as an inner diameter plane, and also referred to as a method of bending the insulated wire in a crosswise direction. Here, "edge plane" means a plane in which short sides (sides along a vertical direction in Figs. 1 to 3) in a longitudinal cross section of a rectangular insulated wire are continuously formed in the axial direction, and "flat plane" means a plane in which long sides (sides along a horizontal direction in Figs. 1 to 3) in a longitudinal cross section of a rectangular insulated wire are continuously formed in the axial direction.

A notched edgewise bending test is a test for evaluating an effect on preventing occurrence of cracks reaching the conductor caused by a mechanical stress that acts on the insulated wire during winding processing of the insulated wire and remains therein after processing, and the test was conducted in accordance with "coiling test" specified in JIS C 3216-3: 2011.

In addition, in order to apply severer conditions, the edgewise bending test was conducted by making one 5 μm-deep incision on an edge plane in an outermost layer of each insulated wire in a peripheral direction (direction perpendicular to an axis line of the insulated wire) as a whole by using a feather razor blade S single edge (manufactured by Feather Safety Razor Co., Ltd.). Subsequently, an edge plane on a side opposite to the incised edge plane was applied to a 1.5 mm bar made of stainless steel (SUS), and the insulated wire was coiled on the bar in such a manner that the incision was directed toward an outside and a length direction of the incision was along an axis line of the bar. After elapse of 1 hour, the incision on the insulated wire was visually observed in a state in which the insulated wire was coiled, and judgement was made depending on criteria described below.

A case where the incision reached the conductor 11 and the conductor 11 was exposed was expressed by "C," a case where the incision was enlarged and cracking was caused in the thermoplastic resin layer, and this cracking reached the thermosetting resin layer was expressed by "B," a case where cracking was caused in the thermoplastic resin layer, but no thermosetting resin layer was exposed (no cracking reached the thermosetting resin layer) was expressed by "A," and a case where the incision in the thermoplastic resin layer was elongated and no incision (no cracking) progressed was expressed by "AA," and "B" or more was regarded as passed.

[Edgewise bending test after heat aging resistance]

The edgewise bending test after heat aging resistance is a test for evaluating the effect on preventing the occurrence of cracks reaching the conductor caused by a thermal shrinkage stress acting on the insulated wire. In this test, an evaluation was performed by appearance observation after each linear insulated wire incised on one side of edge planes similar to the above-described "notched edgewise bending test" was placed in a constant-temperature bath at 200°C for 500 hours.

A case where the incision reached the conductor 11 and the conductor 11 was exposed was expressed by "C," a case where the incision was enlarged and cracking was caused in the thermoplastic resin layer, and this cracking reached the thermosetting resin layer was expressed by "B," a case where cracking was caused in the thermoplastic resin layer, but no thermosetting resin layer was exposed (no cracking reached the thermosetting resin layer) was expressed by "A," and a case where the incision in the thermoplastic resin layer was elongated and no incision (no cracking) progressed was expressed by "AA," and "A" or more was regarded as passed.

{Table.1}

Table 1

| Materials | | Example 1 | Example 2 | Example 3 | Example 4 | Example 5 |
|---|---|---|---|---|---|---|
| Conditions of baking | Heating system | Natural convection system | Natural convection system | Draught-free heating system | Draught-free heating system | Natural convection system |
| | Furnace length | 5 m | 5 m | 8 m | 8 m | 5 m |
| | Temperature/Time | 700°C/10 sec | 680°C/12 sec | 700°C/15 sec | 700°C/20 sec | 680°C/8 sec |
| | Radiation heating by a tubular furnace | Performed | Performed | Not performed | Not performed | Not performed |
| | Temperature/Time | 1000°C/1 sec | 1200°C/1 sec | - | - | - |
| Spraying of liquid component | | Not performed | Not performed | Performed | Not performed | Not performed |
| Conductor 11 | | Copper | Copper | Copper | Copper | Copper |
| Insulted layer 15 | | - | - | - | - | - |
| Thrmosetteing resin layer 12 | Resin | PI | PAI | PAI | HPE | PEsI |
| Interlayer 14 | Resin | - | PPSU | PEI | - | PPSU |
| | Inorganic particles | - | $SiO_2$ | - | - | $TiO_2$ |
| Theroplastic resin layer 13 | Resin | PEEK | PPS | PAEK | PEKK | PEEK |
| Liquid component | Kinds | NMP DMAC | NMP DMAC | NMP DMF DMAC | Cresol Phenol | NMP DMSO Cresol Phenol |
| | Total content (ppm) | 2300 | 2100 | 3000 | 1500 | 4700 |
| Notched edgewise bending test | | A | A | A | A | A |
| Edgewise bending test after heat aging resistance | | A | AA | A | A | AA |

Table 1 (Continued)

| Materials | | Example 6 | Example 7 | Comparative Example 1 | Comparative Example 2 |
|---|---|---|---|---|---|
| Conditions of baking | Heating system | Natural convection system | Draught-free heating system | Natural convection system | Natural convection system |
| | Furnace length | 5 m | 8 m | 8 m | 8 m |
| | Temperature/Time | 700°C/15 sec | 680°C/10 sec | 600°C/35 sec | 600°C/30 sec |
| | Radiation heating by a tubular furnace | Not performed | Not performed | Not performed | Performed |
| | Temperature/Time | - | - | - | 1000°C/1 sec |
| Spraying of liquid component | | Not performed | Not performed | Not performed | Performed |
| Conductor 11 | | Copper | Copper | Copper | Copper |
| Insulted layer 15 | | Polyurethane | - | - | - |
| Thrmosetteing resin layer 12 | Resin | PI | PAI | PI | HPE |
| Interlayer 14 | Resin | SPS | - | - | - |
| | Inorganic particles | - | - | - | - |
| Theroplastic resin layer 13 | Resin | PA66 | PEK | PEEK | PEEK |
| Liquid component | Kinds | NMP | NMP DMAC | NMP DMAC | Xylene Toluene |
| | Total content (ppm) | 3000 | 5500 | 900 | 400 |
| Notched edgewise bending test | | A | A | C | C |
| Edgewise bending test after heat aging resistance | | A | A | C | C |

As is obvious from the results in Table 1, the insulated wires each containing the liquid component in the content satisfying the range according to the present invention in Examples 1 to 7 passed any of the edgewise bending tests, and no incision was enlarged to the cracks reaching the conductor, and such cracks did not occur, either, even by the mechanical stress and the thermal shrinkage stress which were severer than in actual use. Accordingly, these insulated wires have high reliability. Moreover, the cracks occurred in the thermoplastic resin layer can be prevented from reaching the thermosetting resin layer by using these insulated wires.

In particular, in the insulated wires in which the intermediate layer 14 containing the inorganic particles was provided in Examples 2 and 5, the effect on preventing the occurrence of cracks reaching the conductor even after heat aging resistance was high.

Specifically, in Example 1, the resin varnish was baked in the natural convection type baking furnace at a high temperature for a short period of time, and then tubular radiation heating was performed at 1,000°C. Thus, the thermosetting resin layer contained the liquid component in the content satisfying the range according to the present invention, and the insulated wire in Example 1 gave good results in any of the edgewise tests.

In Example 2, the resin varnish was baked in the baking furnace at a high temperature for the short period of time, and then the tubular radiation heating was performed, in a similar manner to Example 1. In comparison with Example 1, although the content of organic solvent became somewhat smaller in comparison with Example 1 by performing the tubular radiation heating at 1,200°C, the insulated wire had the intermediate layer to which the inorganic particles were added to give the results superior to the results in Example 1 in the edgewise test after heat aging resistance.

In Example 3, in comparison with Examples 1 and 2, the resin varnish was baked in the baking furnace at the high temperature for a longer period of time, but the intermediate layer was formed without performing the tubular radiation heating at the high temperature, and the thermoplastic layer was further formed after the liquid component was sprayed thereon, resulted in the insulated wire into which a larger amount of liquid component was incorporated in comparison with Examples 1 and 2. In the insulated wire in Example 3, the content of liquid component in the thermosetting resin layer satisfied the range of the content according to the present invention, and therefore good results were obtained in any of the edgewise tests.

In Example 4, although heating for a longer period of time was performed in comparison with Example 3, and the content of liquid component was smaller than Example 3, the content of liquid component satisfied the range of the content according to the present invention, and therefore good results were obtained in any of the edgewise tests.

In Example 5, heating was performed for a shorter period of time even though temperature conditions similar to the conditions in Example 2 were applied, and a larger amount of liquid component was able to be incorporated thereinto in comparison with Example 2. Further, excellent results were obtained in the edgewise test after heat aging resistance by having the intermediate layer to which the inorganic particles were added.

In Example 6, baking was performed for the long period of time in the furnace under temperature conditions according to the natural convection type same with the conditions in Example 1, and no radiation heating was performed, resulted in the insulated wire containing a larger amount of liquid component in comparison with Example 1. The content of liquid component satisfied the range of the content according to the present invention, and good results were obtained in any of the edgewise tests.

In Example 7, baking was performed in a shorter period of time even through a baking temperature equal to the temperature in Example 2 was applied, resulted in the insulated wire into which a larger amount of liquid component was incorporated. The content of liquid component satisfied the range of the content according to the present invention, and good results were obtained in any of the edgewise tests.

In Comparative Example 1, baking was performed at 600°C according to the natural convection type, being general baking conditions, resulted in the insulated wire in which the content of liquid component did not satisfy the range of the content according to the present invention. Thus, the wire was rejected in any of the edgewise tests.

In Comparative Example 2, the thermosetting resin layer was formed under the general conditions in a manner similar to Comparative Example 1, and then the tubular radiation heating was executed to significantly minimize the liquid component. Although an attempt was made on incorporating the liquid into this thermosetting resin layer by spraying the liquid component thereon, the boiling point of the liquid component was out of the range according to the present invention, and therefore the liquid component was evaporated during forming the thermoplastic resin layer, resulted in the insulated wire in which the content of liquid component was smaller than a lower limit. Thus, the insulated wire was rejected in any of the edgewise tests.

From the above-described results, it is found that the insulated wire of the present invention can be preferably applied to electrical equipment on which a large mechanical stress and thermal shrinkage stress act, as well as ordinary electrical equipment.

REFERENCE SIGNS LIST

1, 2, 3 Insulated wire
11 Conductor
12 Thermosetting resin layer
13 Thermoplastic resin layer
14 Intermediate layer
15 Insulated layer

**Claims**

1. An insulated wire, comprising a thermosetting resin layer, directly or by interposing an insulated layer, on a conductor having a rectangular cross-section, and a thermoplastic resin layer on the thermosetting resin layer, wherein
   the thermosetting resin layer is formed of a thermosetting resin;
   the thermoplastic resin layer is formed of a thermoplastic resin; and wherein
   the insulated wire contains a liquid component that is liquid at 25°C, and has a boiling point of 150°C or higher in a proportion of 1,000 ppm or more and 20,000 ppm or less in the thermosetting resin layer.

2. The insulated wire according to Claim 1, wherein a thermoplastic resin which forms the thermoplastic resin layer is a crystalline thermoplastic resin.

3. The insulated wire according to Claim 1 or 2, wherein the liquid component is at least one kind of solvent selected from the group consisting of N,N-dimethylacetamide, N-methyl-2-pyrrolidone, N,N-dimethylformamide, cresol, phenol, halogenated phenol, and dimethylsulfoxide.

4. The insulated wire according to any one of Claims 1 to 3, wherein the thermoplastic resin layer is provided directly on an intermediate layer formed of a non-crystalline thermoplastic resin.

5. The insulated wire according to any one of Claims 1 to 4, wherein at least one kind of a thermosetting resin which forms the thermosetting resin layer is a thermosetting resin selected from the group consisting of polyimide, polyamideimide, Class H polyester and polyesterimide.

6. The insulated wire according to Claim 4 or 5, wherein the intermediate layer contains at least one kind of inorganic particles selected from the group consisting of silicon oxide, titanium oxide, zinc oxide, magnesium oxide, aluminum oxide, and barium titanate.

7. A coil formed by winding processing the insulated wire according to any one of Claims 1 to 6.

8. Electrical/electronic equipment, having the coil according to Claim 7.


**Patentansprüche**

1. Isolierter Draht, umfassend eine wärmehärtbare Harzschicht direkt oder über eine dazwischen angeordnete isolierte Zwischenschicht auf einem Leiter mit einem rechteckigen Querschnitt, und eine thermoplastische Harzschicht auf der wärmehärtbaren Harzschicht, wobei
die wärmehärtbare Harzschicht aus einem wärmehärtbaren Harz gebildet ist;
die thermoplastische Harzschicht aus einem thermoplastischen Harz gebildet ist; und wobei
der isolierte Draht eine flüssige Komponente, die bei 25 °C flüssig ist und einen Siedepunkt von 150 °C oder mehr aufweist, in einem Anteil von 1.000 ppm oder mehr und 20.000 ppm oder weniger in der wärmehärtbaren Harzschicht enthält.

2. Isolierter Draht nach Anspruch 1, wobei ein thermoplastisches Harz, das die thermoplastische Harzschicht bildet, ein kristallines thermoplastisches Harz ist.

3. Isolierter Draht nach Anspruch 1 oder 2, wobei die flüssige Komponente mindestens eine Art von Lösungsmittel ausgewählt aus der Gruppe ist, bestehend aus N,N-Dimethylacetamid, N-Methyl-2-pyrrolidon, N,N-Dimethylformamid, Cresol, Phenol, halogeniertes Phenol und Dimethylsulfoxid.

4. Isolierter Draht nach einem der Ansprüche 1 bis 3, wobei die thermoplastische Harzschicht direkt auf einer Zwischenschicht ausgebildet ist, die aus einem nichtkristallinen thermoplastischen Harz geformt ist.

5. Isolierter Draht nach einem der Ansprüche 1 bis 4, wobei mindestens eine Art eines wärmehärtbaren Harzes, das die wärmehärtbare Harzschicht bildet, ein wärmehärtbares Harz ausgewählt aus der Gruppe ist, die aus Polyimid, Polyamidimid, Klasse H Polyester und Polyesterimid besteht.

6. Isolierter Draht nach Anspruch 4 oder 5 , wobei die Zwischenschicht mindestens eine Art von anorganischen Teilchen enthält, ausgewählt aus der Gruppe, bestehend aus Siliciumoxid, Titanoxid, Zinkoxid, Magnesiumoxid, Aluminiumoxid, und Barium-Titanat.

7. Spule, die durch Wicklungsbearbeitung des isolierten Drahts nach einem der Ansprüche 1 bis 6 gebildet wird.

8. Elektrisches / elektronisches Gerät mit der Spule nach Anspruch 7.


**Revendications**

1. Fil isolé, comprenant une couche de résine thermodurcissable, directement ou en interposant une couche isolante, sur un conducteur ayant une section transversale rectangulaire et une couche de résine thermoplastique sur la couche de résine thermodurcissable, dans lequel
la couche de résine thermodurcissable est formée d'une résine thermodurcissable;
la couche de résine thermoplastique est formée d'une résine thermoplastique; et dans lequel
le fil isolé contient un composant liquide qui est liquide à 25 °C et dont le point d'ébullition est égal ou supérieur à 150 °C dans une proportion de 1 000 ppm ou plus et à 20 000 ppm ou moins dans la couche de résine thermodurcissable.

2. Fil isolé selon la revendication 1, dans lequel la résine thermoplastique qui forme la couche de résine thermoplastique est une résine thermoplastique cristalline.

**3.** Fil isolé selon la revendication 1 ou 2, dans lequel le composant liquide est au moins un type de solvant choisi dans le groupe consistant en N,N-diméthylacétamide, N-méthyl-2-pyrrolidone, N,N-diméthylformamide, cresol, phénol, phénol halogéné et diméthylsulfoxyde.

**4.** Fil isolé selon l'une quelconque des revendications 1 à 3, dans lequel la couche de résine thermoplastique est prévue directement sur une couche intermédiaire formée d'une résine thermoplastique non-cristalline.

**5.** Fil isolé selon l'une quelconque des revendications 1 à 4, dans lequel au moins un type d'une résine thermodurcissable qui forme la couche de résine thermodurcissable est une résine thermodurcissable choisie dans le groupe consistant en polyimide, polyamideimide, polyester de la classe H et polyesterimide.

**6.** Fil isolé selon la revendication 4 ou 5, dans lequel la couche intermédiaire contient au moins un type de particules inorganique choisies dans le groupe consistant en l'oxyde de silicium, l'oxyde de titane, l'oxyde de zinc, l'oxyde de magnésium, l'oxyde d'aluminium, et le baryum titanate.

**7.** Bobine formée par un procédé d'enroulement du fil isolé selon l'une quelconque des revendications 1 à 6.

**8.** Equipement électrique / électronique, ayant la bobine selon la revendication 7.

## Fig. 1

## Fig. 2

## Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63195913 A
- JP 4245244 B

- US 20130037304 A1